# EUROPEAN PATENT APPLICATION

(11) **EP 4 738 967 A1**
(43) Date of publication of application: **06.05.2026**
(21) Application number: 24830252.3
(22) Date of filing: 16.05.2024
(51) Int. Cl.: H04W 72/50

(54) **CONSISTENT LISTEN-BEFORE-TALK FAILURE PROCESSING METHOD AND APPARATUS, AND TERMINAL**

(30) Priority: 30.06.2023 CN 202310795154
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2024/093578
(87) International publication number: WO 2025/001604

(57) **Abstract**

This application provides a method and an apparatus for processing a consistent listen-before-talk failure, and a terminal, which relate to the field of communication technologies. The method is performed by a terminal and includes: performing at least one of the following operations when a consistent listen-before-talk failure occurs on a sidelink interface and a sidelink interface resource allocation mode reconfiguration message is received: when a resource allocation mode of the sidelink interface of the terminal is reconfigured from a first resource allocation mode to a second resource allocation mode, triggering a media access control control element for the consistent listen-before-talk failure of the sidelink interface; and when a resource allocation mode of the sidelink interface of the terminal is reconfigured from the second resource allocation mode to the first resource allocation mode, triggering selection or reselection of a first resource.

## Description

### CROSS-REFERENCE TO RELATED APPLICATIONS

This application claims the priority to Chinese Patent Application No. 202310795154.3, filed in China on June 30, 2023, entitled "Consistency Listen-Before-Talk Failure Handling Method, Apparatus, and Terminal," the entire contents of which are incorporated herein by reference.

### TECHNICAL FIELD

The present disclosure relates to the field of communication technologies, and in particular to a method, an apparatus, and a terminal for handling consistency listen-before-talk failure.

### BACKGROUND

After a terminal experiences a consistency listen-before-talk (LBT) failure on a sidelink unlicensed (SL-U) interface operating on an unlicensed spectrum, how the terminal performs subsequent processing when a resource allocation mode corresponding to the terminal changes becomes an urgent problem to be solved.

### SUMMARY

An embodiment of the present disclosure provides a method, an apparatus, and a terminal for handling consistency listen-before-talk (LBT) failure, so as to ensure that the terminal can perform consistency listen-before-talk failure recovery on a sidelink unlicensed (SL-U) interface when a consistency listen-before-talk failure occurs on the sidelink unlicensed interface and a resource allocation mode corresponding to the terminal changes.

To solve the above technical problem, an embodiment of the present disclosure provides a method for handling consistency listen-before-talk failure, which is performed by a terminal, and includes:
in a case of a consistency listen-before-talk failure on a sidelink unlicensed interface, performing a first operation when a sidelink unlicensed interface resource allocation mode reconfiguration message is received;
wherein the first operation includes at least one of the following:
   when a resource allocation mode of the sidelink unlicensed interface of the terminal is reconfigured from a first resource allocation mode to a second resource allocation mode, triggering a media access control (MAC) control element for a consistency listen-before-talk failure of the sidelink unlicensed interface;
   when a resource allocation mode of the sidelink unlicensed interface of the terminal is reconfigured from the second resource allocation mode to the first resource allocation mode, triggering selection or reselection of a first resource.

In some embodiments, when the first operation includes triggering the media access control (MAC) control element for a consistency listen-before-talk failure of the sidelink unlicensed interface in a case that the resource allocation mode of the sidelink unlicensed interface of the terminal is reconfigured from the first resource allocation mode to the second resource allocation mode, the method further includes:
stopping recovery from the consistency listen-before-talk failure of the sidelink unlicensed interface.

In some embodiments, when the first operation includes triggering the selection or reselection of the first resource in a case that the resource allocation mode of the sidelink unlicensed interface of the terminal is reconfigured from the second resource allocation mode to the first resource allocation mode, the method further includes:
performing a second operation;
wherein the second operation includes at least one of the following:
   discarding a media access control (MAC) control element for a consistency listen-before-talk failure of the sidelink unlicensed interface that has been generated.

Canceling a triggered consistency listen-before-talk failure of the sidelink unlicensed interface.

In some embodiments, the first resource includes at least one of the following:
a resource block set;
a resource pool.
In some embodiments, the selection or reselection of the first resource includes at least one of the following:
   performing resource pool selection or reselection, and selecting at least one resource block set within the selected resource pool;
   selecting at least one resource block set within a target resource pool, wherein the target resource pool includes a resource pool used by the terminal before the reconfiguration of the resource allocation mode of the sidelink unlicensed interface.

In some embodiments, the selecting at least one resource block set within the selected resource pool includes:
determining a first target resource block set within the selected resource pool, wherein the first target resource block set includes resource block sets where a consistency listen-before-talk failure of the sidelink unlicensed interface has not occurred;
selecting at least one resource block set from the first target resource block set.

In some embodiments, the selecting at least one resource block set within the target resource pool includes:
determining a second target resource block set within the target resource pool, wherein the second target resource block set includes resource block sets where a consistency listen-before-talk failure of the sidelink unlicensed interface has not occurred;
selecting at least one resource block set from the second target resource block set.

In some embodiments, the method further includes:
triggering resource pool reselection when no resource block set where a consistency listen-before-talk failure of the sidelink unlicensed interface has not occurred exists in the resource pool.
selecting at least one resource block set from resource block sets in a reselected resource pool where a consistency listen-before-talk failure of the sidelink unlicensed interface has not occurred.

In some embodiments, the selecting at least one resource block set includes at least one of the following:
randomly selecting at least one resource block set;
selecting at least one resource block set based on sensing;
selecting at least one resource block set based on partial sensing.

In some embodiments, the consistency listen-before-talk failure of the sidelink unlicensed interface includes at least one of the following:
a consistency listen-before-talk failure is triggered by the sidelink unlicensed interface of the terminal;
a consistency listen-before-talk failure is triggered by the sidelink unlicensed interface of the terminal, and the triggered consistency listen-before-talk failure is not canceled.

In some embodiments, the first resource allocation mode is a terminal autonomous resource allocation mode, and the second resource allocation mode is a network-scheduled resource allocation mode.

An embodiment of the present disclosure further provides a terminal, including a memory, a transceiver, and a processor, wherein:
the memory is configured to store a computer program; the transceiver is configured to transmit and receive data under the control of the processor; and the processor is configured to read the computer program from the memory and perform the following operations:
in a case of a consistency listen-before-talk failure of the sidelink unlicensed interface, performing a first operation when a sidelink unlicensed interface resource allocation mode reconfiguration message is received;
wherein the first operation includes at least one of the following:
   when a resource allocation mode of the sidelink unlicensed interface of the terminal is reconfigured from a first resource allocation mode to a second resource allocation mode, triggering a media access control (MAC) control element for a consistency listen-before-talk failure of the sidelink unlicensed interface;
   when a resource allocation mode of the sidelink unlicensed interface of the terminal is reconfigured from the second resource allocation mode to the first resource allocation mode, triggering selection or reselection of a first resource.

In some embodiments, when the first operation includes triggering the media access control (MAC) control element for a consistency listen-before-talk failure of the sidelink unlicensed interface in a case that the resource allocation mode of the sidelink unlicensed interface of the terminal is reconfigured from the first resource allocation mode to the second resource allocation mode, the processor is further configured to read the computer program from the memory and perform the following operation:
stopping recovery from the consistency listen-before-talk failure of the sidelink unlicensed interface.

In some embodiments, when the first operation includes triggering the selection or reselection of the first resource in a case that the resource allocation mode of the sidelink unlicensed interface of the terminal is reconfigured from the second resource allocation mode to the first resource allocation mode, the processor is further configured to read the computer program from the memory and perform the following operation:
performing a second operation;
wherein the second operation includes at least one of the following:
   discarding a media access control (MAC) control element for a consistency listen-before-talk failure of the sidelink unlicensed interface that has been generated;
   canceling a triggered consistency listen-before-talk failure of the sidelink unlicensed interface.

In some embodiments, the first resource includes at least one of the following:
a resource block set;
a resource pool.

In some embodiments, the processor is configured to read the computer program from the memory and perform at least one of the following operations:
performing resource pool selection or reselection, and selecting at least one resource block set within the selected resource pool;
selecting at least one resource block set within a target resource pool, wherein the target resource pool includes a resource pool used by the terminal before the reconfiguration of the resource allocation mode of the sidelink unlicensed interface.

In some embodiments, the processor is configured to read the computer program from the memory and perform the following operations:
determining a first target resource block set within the selected resource pool, wherein the first target resource block set includes resource block sets where a consistency listen-before-talk failure of the sidelink unlicensed interface has not occurred;
selecting at least one resource block set from the first target resource block set.

In some embodiments, the processor is configured to read the computer program from the memory and perform the following operations:
determining a second target resource block set within the target resource pool, wherein the second target resource block set includes resource block sets where a consistency listen-before-talk failure of the sidelink unlicensed interface has not occurred;
selecting at least one resource block set from the second target resource block set.

In some embodiments, the processor is further configured to read the computer program from the memory and perform the following operations:
triggering resource pool reselection when no resource block set where a consistency listen-before-talk failure of the sidelink unlicensed interface has not occurred exists in the resource pool;
selecting at least one resource block set from resource block sets in a reselected resource pool where a consistency listen-before-talk failure of the sidelink unlicensed interface has not occurred.

In some embodiments, the processor is configured to read the computer program from the memory and perform at least one of the following operations:
randomly selecting at least one resource block set;
selecting at least one resource block set based on sensing.
selecting at least one resource block set based on partial sensing.

In some embodiments, the consistency listen-before-talk failure of the sidelink unlicensed interface includes at least one of the following:
a consistency listen-before-talk failure is triggered by the sidelink unlicensed interface of the terminal;
a consistency listen-before-talk failure is triggered by the sidelink unlicensed interface of the terminal, and the triggered consistency listen-before-talk failure is not canceled.

In some embodiments, the first resource allocation mode is a terminal autonomous resource allocation mode, and the second resource allocation mode is a network-scheduled resource allocation mode.

An embodiment of the present disclosure further provides a consistency listen-before-talk failure handling apparatus, which is applied to a terminal, and includes:
a first execution unit, configured to perform a first operation when a sidelink unlicensed interface resource allocation mode reconfiguration message is received in a case of a consistency listen-before-talk failure of the sidelink unlicensed interface;
wherein the first operation includes at least one of the following:
   when a resource allocation mode of the sidelink unlicensed interface of the terminal is reconfigured from a first resource allocation mode to a second resource allocation mode, triggering a media access control (MAC) control element for a consistency listen-before-talk failure of the sidelink unlicensed interface;
   when a resource allocation mode of the sidelink unlicensed interface of the terminal is reconfigured from the second resource allocation mode to the first resource allocation mode, triggering selection or reselection of a first resource.

An embodiment of the present disclosure further provides a processor-readable storage medium, storing a computer program, wherein the computer program is configured to enable the processor to execute the above method.

The beneficial effects of the present disclosure are as follows:

through defining operations to be performed by a terminal when a consistency listen-before-talk failure occurs in a resource block set of a sidelink unlicensed interface and when a resource allocation mode reconfiguration message of the sidelink unlicensed interface is received, the terminal is ensured to perform recovery from a consistency listen-before-talk failure of the sidelink unlicensed interface.
**BRIEF DESCRIPTION OF THE DRAWINGS**

To make the embodiments or the technical solutions of the present disclosure or of the related art clearer, the drawings required for the description of the embodiments or of the related art will be briefly introduced below. Obviously, the drawings described below merely illustrate some embodiments of the present disclosure, and for those skilled in the art, other drawings can also be obtained based on these drawings without creative effort.
FIG. 1 shows a structural diagram of a network system applicable to an embodiment of the present disclosure.
FIG. 2 shows a schematic flow chart of a consistency listen-before-talk failure handling method according to an embodiment of the present disclosure.
FIG. 3 shows a schematic flow chart of a specific process in application scenario 1 according to an embodiment of the present disclosure.
FIG. 4 shows a schematic flow chart of a specific process in application scenario 2 according to an embodiment of the present disclosure.
FIG. 5 shows a schematic structural diagram of a consistency listen-before-talk failure handling apparatus according to an embodiment of the present disclosure.
FIG. 6 shows a structural diagram of a terminal according to an embodiment of the present disclosure.

### DETAILED DESCRIPTION

The technical solutions of the embodiments of the present disclosure will be clearly and completely described below with reference to the accompanying drawings. Obviously, the embodiments described are only part of the embodiments of the present disclosure, rather than all embodiments. Based on the embodiments in the present disclosure, all other embodiments obtained by those skilled in the art without creative effort fall within the scope of the present disclosure.

The terms "first" , "second" , and the like in the specification and claims of the present disclosure are used to distinguish similar objects and are not intended to indicate a specific order or sequence. It should be understood that data used in this way can be interchanged under appropriate circumstances, so that the embodiments of the present disclosure described herein can be implemented in sequences other than those illustrated or described herein. In addition, the terms "comprise" and "have," as well as any variations thereof, are intended to cover a non-exclusive inclusion. For example, a process, method, system, product, or apparatus that comprises a series of steps or units is not limited to only those steps or units explicitly listed, but may include other steps or units that are not explicitly listed or that are inherent to such process, method, product, or apparatus.

In the embodiments of the present disclosure, the term " and/or " describes an association relationship of associated objects, indicating that there may be three kinds of relationships. For example, A and/or B may represent three situations: A alone, both A and B, or B alone. The character "/" generally indicates that the associated objects before and after the character are in an "or" relationship. The term "multiple" refers to two or more, and other quantifiers are similar.

In the embodiments of the present disclosure, the words "exemplary" or "for example" are used to indicate illustration, instance, or explanation. Any embodiment or design scheme described as "exemplary" or "for example" should not be construed as being more preferred or advantageous than other embodiments or design schemes. Rather, the use of such words is intended to present related concepts in a specific manner.

The related concepts mentioned in the present disclosure are briefly described as follows.

Conventional wireless communication adopts a cellular communication mode, that is, a terminal and a network device perform uplink and downlink data/control information transmission through a Uu interface.

Direct communication refers to a mode in which neighboring terminals can perform data transmission within a short range through a direct communication link (also referred to as a sidelink or PC5 link, abbreviated as SL). The wireless interface corresponding to the sidelink is referred to as a direct communication interface (also referred to as a sidelink interface or PC5 interface).

For a shared spectrum (which may also be referred to as an unlicensed spectrum), before a terminal transmitter sends data, it needs to first listen to a control channel, that is, it needs to support the listen-before-talk (LBT) mechanism. The purpose of introducing the LBT mechanism is to avoid conflicts as much as possible when different terminals use the shared spectrum.

LBT is performed by the physical layer of the terminal. If the terminal detects that the channel is occupied, it does not perform data transmission. If the physical layer of the terminal performs LBT before data transmission and finds that the channel is occupied and transmission cannot be performed, the physical layer indicates an LBT failure to the medium access control (MAC) layer.

The MAC layer maintains a timer (lbt-FailureDetectionTimer) and a counter (LBT_COUNTER), and the initial value of the counter is 0. Each time the MAC layer receives an LBT failure indication from the physical layer, it restarts the timer and increments the counter by 1. If the counter LBT_COUNTER reaches a preset maximum value while the lbt-FailureDetectionTimer is running, the MAC layer determines that a consistent LBT failure (referred to in the protocol as "consistent LBT failure" ) has occurred.

The embodiments of the present disclosure will be described below with reference to the accompanying drawings. The consistency listen-before-talk (LBT) failure handling method, apparatus, and terminal provided by the embodiments of the present disclosure can be applied to a wireless communication system. The wireless communication system may be a system employing fifth generation (5G) mobile communication technology (hereinafter referred to as the 5G system). It should be understood by those skilled in the art that the 5G NR system is only an example and is not intended to limit the present disclosure.

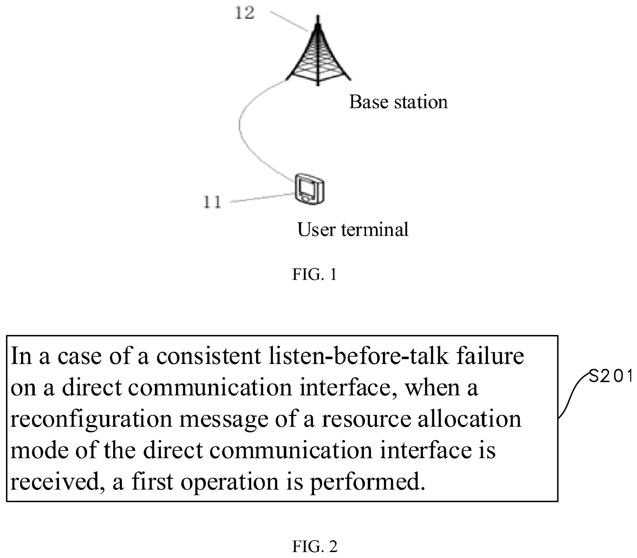

Referring to FIG. 1, FIG. 1 is a structural diagram of a network system applicable to the embodiments of the present disclosure. As shown in FIG. 1, the network system includes a user terminal 11 and a base station 12. The user terminal 11 may be a user equipment (UE), such as a mobile phone, a tablet personal computer, a laptop computer, a personal digital assistant (PDA), a mobile internet device (MID), or a wearable device, etc. It should be noted that the specific type of the user terminal 11 is not limited in the embodiments of the present disclosure. The base station 12 may be a base station of 5G or later versions (for example, gNB or 5G NR NB), or a base station in another communication system, also referred to as a Node B. It should be noted that, in the embodiments of the present disclosure, a 5G base station is taken as an example, but the specific type of the base station 12 is not limited thereto.

An embodiment of the present disclosure provides a method, an apparatus, and a terminal for handling consistency listen-before-talk failure, so as to ensure that the terminal can perform recovery from a consistency listen-before-talk failure on a sidelink unlicensed (SL-U) interface when a consistency listen-before-talk failure occurs on the sidelink unlicensed interface and a resource allocation mode corresponding to the terminal changes.

The method and apparatus are conceived under the same application, and since the principles for solving the problems are similar, the implementations of the method and apparatus can be referred to each other, and repeated descriptions are omitted.

As shown in FIG. 2, an embodiment of the present disclosure provides a method for handling consistency listen-before-talk failure, which is performed by a terminal and includes:
step S201: in a case of a consistency listen-before-talk failure of the sidelink unlicensed interface, performing a first operation when a sidelink unlicensed interface resource allocation mode reconfiguration message is received;
wherein the first operation includes at least one of the following:
   A11: when a resource allocation mode of the sidelink unlicensed interface of the terminal is reconfigured from a first resource allocation mode to a second resource allocation mode, triggering a media access control (MAC) control element for a consistency listen-before-talk failure of the sidelink unlicensed interface.

In some embodiments, triggering the media access control (MAC) control element for a consistency listen-before-talk failure of the sidelink unlicensed interface may be understood as that the terminal determines that a media access control control element for a consistency listen-before-talk failure of the sidelink unlicensed interface needs to be transmitted. In some embodiments, when the Uu interface satisfies certain conditions (for example, uplink resources are available and can carry the media access control control element for a consistency listen-before-talk failure of the sidelink unlicensed interface), the terminal transmits the media access control control element for a consistency listen-before-talk failure of the sidelink unlicensed interface to the network device through the uplink resources.

A12: when a resource allocation mode of the sidelink unlicensed interface of the terminal is reconfigured from the second resource allocation mode to the first resource allocation mode, triggering selection or reselection of a first resource.

In some embodiments, triggering selection or reselection of the first resource may be understood as that the terminal needs to determine the first resource and use the determined first resource to perform recovery from a listen-before-talk failure.

In some embodiments, the first resource allocation mode in the embodiments of the present disclosure is a terminal autonomous resource allocation mode, and the second resource allocation mode is a network-scheduled resource allocation mode.

It should be noted that the embodiments of the present disclosure ensure that the terminal can perform recovery from a consistency listen-before-talk failure of the sidelink unlicensed interface by specifying operations to be executed when a resource allocation mode reconfiguration message of the sidelink unlicensed interface is received in the case of a consistency listen-before-talk failure.

Optionally, in one implementation, the consistency listen-before-talk failure of the sidelink unlicensed interface includes at least one of the following:
B11: a consistency listen-before-talk failure is triggered by the sidelink unlicensed interface of the terminal;
B12: a consistency listen-before-talk failure is triggered by the sidelink unlicensed interface of the terminal, and the triggered consistency listen-before-talk failure is not canceled.

Optionally, in one implementation, when the first operation includes triggering the media access control (MAC) control element for a consistency listen-before-talk failure of the sidelink unlicensed interface in a case that the resource allocation mode of the sidelink unlicensed interface of the terminal is reconfigured from the first resource allocation mode to the second resource allocation mode, the method further includes:
stopping recovery from the consistency listen-before-talk failure of the sidelink unlicensed interface.

It should be noted that when a consistency listen-before-talk failure occurs in a terminal autonomous resource allocation mode, the terminal performs recovery from a consistency listen-before-talk failure. If, during this process, the terminal receives a resource allocation mode reconfiguration message of the sidelink unlicensed interface and determines that the resource allocation mode is to be changed from the terminal autonomous resource allocation mode to the network-scheduled resource allocation mode, the terminal shall no longer continue the recovery from a consistency listen-before-talk failure. At this time, the terminal needs to stop the recovery from a consistency listen-before-talk failure of the sidelink unlicensed interface, and then generate a media access control (MAC) control element for a consistency listen-before-talk failure of the sidelink unlicensed interface, and transmit the media access control control element to the network device.

Optionally, in one implementation, when the first operation includes triggering selection or reselection of the first resource in a case that the resource allocation mode of the sidelink unlicensed interface of the terminal is reconfigured from the second resource allocation mode to the first resource allocation mode, the method further includes:
performing a second operation;
wherein the second operation includes at least one of the following:
   C11: discarding a media access control (MAC) control element for a consistency listen-before-talk failure of the sidelink unlicensed interface that has been generated.

It should be noted that when a consistency listen-before-talk failure occurs in a network-scheduled resource allocation mode, the terminal triggers a media access control (MAC) control element for a consistency listen-before-talk failure of the sidelink unlicensed interface and generates such a control element. If, during this process, the terminal receives a resource allocation mode reconfiguration message of the sidelink unlicensed interface and determines that the resource allocation mode is to be changed from the network-scheduled resource allocation mode to the terminal autonomous resource allocation mode, the terminal does not need to transmit the media access control control element for the consistency listen-before-talk failure of the sidelink unlicensed interface. At this time, the terminal needs to discard the generated media access control control element for the consistency listen-before-talk failure of the sidelink unlicensed interface. The terminal also needs to perform recovery from the consistency listen-before-talk failure, and the specific timing for performing such recovery depends on the implementation of the terminal.

C12: canceling a triggered consistency listen-before-talk failure of the sidelink unlicensed interface.

It should be noted that when a consistency listen-before-talk failure occurs in a network-scheduled resource allocation mode, the terminal triggers a consistency listen-before-talk failure of the sidelink unlicensed interface. If, during this process, the terminal receives a resource allocation mode reconfiguration message of the sidelink unlicensed interface and determines that the resource allocation mode is to be changed from the network-scheduled resource allocation mode to the terminal autonomous resource allocation mode, it can be determined that the terminal has not experienced a consistency listen-before-talk failure of the sidelink unlicensed interface. At this time, the terminal needs to cancel the triggered consistency listen-before-talk failure of the sidelink unlicensed interface. The terminal also needs to perform recovery from the consistency listen-before-talk failure, and the specific timing for performing such recovery depends on the implementation of the terminal.

Optionally, in one implementation, the first resource includes at least one of the following:
a resource block set (RB set);
a resource pool.

Optionally, in one implementation, the selection or reselection of the first resource includes at least one of the following:
D11: performing resource pool selection or reselection, and selecting at least one resource block set within the selected resource pool.

It should be noted that in this case, it may be understood that when the resource allocation mode of the sidelink unlicensed interface of the terminal is reconfigured from the network-scheduled resource allocation mode to the terminal autonomous resource allocation mode, resource pool selection or reselection is performed, and at least one resource block set is selected within the selected resource pool.

Optionally, in one implementation, the selecting at least one resource block set within the selected resource pool includes:
determining a first target resource block set within the selected resource pool, wherein the first target resource block set includes resource block sets where a consistency listen-before-talk failure of the sidelink unlicensed interface has not occurred;
selecting at least one resource block set from the first target resource block set.

It should be noted that in this case, it may be understood that when the resource allocation mode of the sidelink unlicensed interface of the terminal is reconfigured from the network-scheduled resource allocation mode to the terminal autonomous resource allocation mode, resource pool selection or reselection is performed, and at least one resource block set is selected from resource block sets within the selected resource pool where a consistency listen-before-talk failure of the sidelink unlicensed interface has not occurred.

D12: selecting at least one resource block set within a target resource pool, wherein the target resource pool includes a resource pool used by the terminal before the reconfiguration of the resource allocation mode of the sidelink unlicensed interface.

It should be noted that in this case, it may be understood that when the resource allocation mode of the sidelink unlicensed interface of the terminal is reconfigured from the network-scheduled resource allocation mode to the terminal autonomous resource allocation mode, the resource pool used by the terminal before the reconfiguration of the resource allocation mode of the sidelink unlicensed interface is taken as the selected resource pool, and at least one resource block set is selected within the selected resource pool.

Optionally, in one implementation, the selecting at least one resource block set within the target resource pool includes:
determining a second target resource block set within the target resource pool, wherein the second target resource block set includes resource block sets where a consistency listen-before-talk failure of the sidelink unlicensed interface has not occurred.
selecting at least one resource block set from the second target resource block set.

It should be noted that in this case, it may be understood that when a resource allocation mode of the sidelink unlicensed interface of the terminal is reconfigured from a network-scheduled resource allocation mode to a terminal autonomous resource allocation mode, a resource pool used by the terminal before the reconfiguration of the resource allocation mode of the sidelink unlicensed interface is taken as a resource pool selected by the terminal, and at least one resource block set is selected from resource block sets within the selected resource pool where a consistency listen-before-talk failure of the sidelink unlicensed interface has not occurred.

In some embodiments, it should also be noted that, in the cases of D11 and D12 above, when no resource block set where a consistency listen-before-talk failure of the sidelink unlicensed interface has not occurred exists in the selected resource pool, the method further comprises:
triggering resource pool reselection when no resource block set where a consistency listen-before-talk failure of the sidelink unlicensed interface has not occurred exists in the resource pool;
selecting at least one resource block set from resource block sets in a reselected resource pool where a consistency listen-before-talk failure of the sidelink unlicensed interface has not occurred.

For example, when a resource allocation mode of the sidelink unlicensed interface of the terminal is reconfigured from a network-scheduled resource allocation mode to a terminal autonomous resource allocation mode, and resource pool selection or reselection is performed, if no resource block set where a consistency listen-before-talk failure of the sidelink unlicensed interface has not occurred exists in the selected resource pool, resource pool reselection is triggered, and at least one resource block set is selected from resource block sets in a reselected resource pool where a consistency listen-before-talk failure of the sidelink unlicensed interface has not occurred.

For example, when a resource allocation mode of the sidelink unlicensed interface of the terminal is reconfigured from a network-scheduled resource allocation mode to a terminal autonomous resource allocation mode, a resource pool used by the terminal before the reconfiguration of the resource allocation mode of the sidelink unlicensed interface is taken as a resource pool selected by the terminal. If no resource block set where a consistency listen-before-talk failure of the sidelink unlicensed interface has not occurred exists in the resource pool used before the reconfiguration, resource pool reselection is triggered, and at least one resource block set is selected from resource block sets in a reselected resource pool where a consistency listen-before-talk failure of the sidelink unlicensed interface has not occurred.

Optionally, in one implementation, the selecting of at least one resource block set comprises at least one of the following:
randomly selecting at least one resource block set;
selecting at least one resource block set based on sensing;
selecting at least one resource block set based on partial sensing.

The specific implementation of the embodiments of the present disclosure is exemplified as follows.

Application scenario 1: reconfiguring a terminal autonomous resource allocation mode to a network-scheduled resource allocation mode.

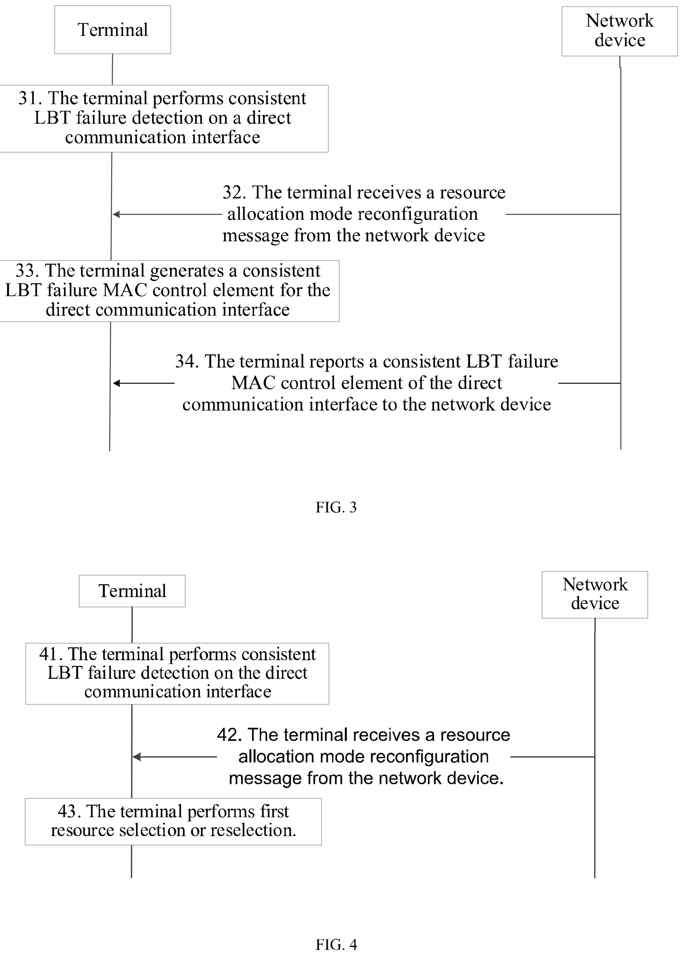

As shown in FIG. 3, the specific implementation process comprises:
step 31: performing, by the terminal, consistency listen-before-talk (LBT) failure detection of the sidelink unlicensed interface;
when the sidelink unlicensed interface of the terminal has data to be transmitted, performing resource pool selection first, and then performing resource selection within the selected resource pool; for 5G, the granularity of resource selection is one or more resource block sets (RB sets). After resource selection is completed, generating, by the terminal, a transport block (TB) corresponding to a Physical Sidelink Shared Channel (PSSCH) transmission, and performing LBT on one or more RB sets to be used for TB transmission.

It should be noted that the granularity of the LBT execution is a single RB set.

The LBT is performed by a physical layer of the terminal. When the terminal detects that the channel is occupied, data transmission is not performed. When the terminal detects that the channel is idle, data transmission is performed. Meanwhile, the physical layer indicates an LBT failure to a Medium Access Control (MAC) layer.

The MAC layer maintains a timer, namely an LBT failure detection timer (lbt-FailureDetectionTimer), and a counter, namely an LBT counter (LBT_COUNTER), wherein an initial value of the counter is 0. Each time the MAC layer receives an LBT failure indication from the physical layer, the MAC layer restarts the timer and increments the counter by one. When the LBT_COUNTER reaches a preset maximum value while the lbt-FailureDetectionTimer is running, the MAC layer determines that a consistent LBT failure has occurred on the RB set.

Since the resource allocation mode of the terminal at this time is the terminal autonomous resource allocation mode, an autonomous consistent LBT failure recovery is performed by the terminal, wherein the recovery process comprises at least one of the following:.
E11: selecting, by the terminal, one or more resource block sets (RB sets) from RB sets within a currently selected resource pool where a consistency listen-before-talk (LBT) failure of the sidelink unlicensed interface has not occurred to perform consistency LBT failure recovery;
E12: selecting, by the terminal, one or more RB sets from RB sets within all currently available resource pools where a consistency LBT failure of the sidelink unlicensed interface has not occurred to perform consistency LBT failure recovery.

Step 32: receiving, by the terminal, a resource allocation mode reconfiguration message from a network device;
it should be noted that in this step, the terminal receives configuration information (for example, a Radio Resource Control (RRC) reconfiguration message) from the network device, and the RRC reconfiguration message reconfigures a resource allocation mode of the sidelink unlicensed interface of the terminal from a terminal autonomous resource allocation mode to a network-scheduled resource allocation mode.

Step 33: generating, by the terminal, a media access control control element (MAC CE) for a consistency LBT failure of the sidelink unlicensed interface;
it should be noted that in this step, when a first condition of the sidelink unlicensed interface is satisfied, if a resource allocation mode reconfiguration message of the sidelink unlicensed interface is received, the following operation is performed:
when a resource allocation mode of the sidelink unlicensed interface of the terminal is reconfigured from a terminal autonomous resource allocation mode (a terminal autonomous resource allocation mode) to a network-scheduled resource allocation mode (a network-scheduled resource allocation mode), triggering generation, by the terminal, of a media access control control element (MAC CE) for a consistency listen-before-talk (LBT) failure of the sidelink unlicensed interface.

In some embodiments, when the terminal receives the resource allocation mode reconfiguration information, the terminal may also stop an ongoing consistency LBT failure recovery.
wherein the first condition comprises one or more of the following:
a consistency LBT failure of the sidelink unlicensed interface is triggered by the terminal;
a consistency LBT failure of the sidelink unlicensed interface is triggered by the terminal and the triggered consistency LBT failure is not canceled.

Step 34: reporting, by the terminal, the MAC CE for the consistency LBT failure of the sidelink unlicensed interface to the network device;
if an uplink resource is available on a Uu interface of the terminal and, according to a logical channel priority order, the uplink resource can carry the MAC CE for the consistency LBT failure of the sidelink unlicensed interface, the MAC CE can be directly reported through the uplink resource.
if no uplink resource is available on the Uu interface of the terminal, a scheduling request (SR) is triggered to request an uplink resource for transmission of the MAC CE through an SR procedure; specifically, the SR may reuse an SR resource corresponding to a Sidelink Channel State Information MAC Control Element (SL CSI MAC CE), or use an SR resource specifically configured for the MAC CE for the consistency LBT failure of the sidelink unlicensed interface.

Application scenario 2: reconfiguring a network-scheduled resource allocation mode to a terminal autonomous resource allocation mode.

As shown in FIG. 4, the specific implementation process comprises:
Step 41: performing, by the terminal, consistency LBT failure detection of the sidelink unlicensed interface;
when the sidelink unlicensed interface of the terminal has data to be transmitted, performing resource pool selection first, and then performing resource selection within the selected resource pool; for 5G, the granularity of resource selection is one or more RB sets; after resource selection is completed, generating, by the terminal, a transport block (TB) corresponding to a Physical Sidelink Shared Channel (PSSCH) transmission, and performing LBT on one or more RB sets to be used for TB transmission.
it should be noted that the granularity of LBT execution is a single RB set.
the LBT is performed by a physical layer of the terminal; when the terminal detects that the channel is occupied, data transmission is not performed; when the terminal detects that the channel is idle, data transmission is performed; meanwhile, the physical layer indicates an LBT failure to a Medium Access Control (MAC) layer.
the MAC layer maintains a timer, namely an LBT failure detection timer (lbt-FailureDetectionTimer), and a counter, namely an LBT counter (LBT_COUNTER), wherein an initial value of the counter is 0; each time the MAC layer receives an LBT failure indication from the physical layer, the MAC layer restarts the timer and increments the counter by one; when the LBT_COUNTER reaches a preset maximum value while the lbt-FailureDetectionTimer is running, the MAC layer determines that a consistent LBT failure has occurred on the RB set.
since the resource allocation mode of the terminal at this time is the network-scheduled resource allocation mode, the terminal performs at least one of the following operations:
   E21: generating a media access control control element (MAC CE) for a consistency listen-before-talk failure of the sidelink unlicensed interface;
   E22: triggering a consistency listen-before-talk failure of the sidelink unlicensed interface.

Step 42: receiving, by the terminal, a resource allocation mode reconfiguration message from the network device;
it should be noted that in this step, the terminal receives configuration information (for example, an RRC reconfiguration message) from the network device, and the RRC reconfiguration message reconfigures the resource allocation mode of the sidelink unlicensed interface of the terminal from the network-scheduled resource allocation mode to the terminal autonomous resource allocation mode.

Step 43: performing, by the terminal, selection or reselection of a first resource;
it should be noted that in this step, the selection or reselection of the first resource comprises one or more of the following:
E31: performing RB set selection or reselection;
E32: performing resource pool selection or reselection.

In some embodiments, the process of resource selection or reselection comprises at least one of the following:
E41: performing, by the terminal, resource pool selection, and then selecting one or more resource block sets (RB sets) within the selected resource pool;
E42: performing, by the terminal, resource pool selection, and then selecting one or more RB sets from RB sets within the selected resource pool where a consistency listen-before-talk (LBT) failure of the sidelink unlicensed interface has not occurred;
E43: taking, by the terminal, a resource pool used before reconfiguration of the resource allocation mode of the sidelink unlicensed interface as the selected resource pool, and selecting one or more RB sets within the selected resource pool;
E44: taking, by the terminal, a resource pool used before reconfiguration of the resource allocation mode of the sidelink unlicensed interface as the selected resource pool, and selecting one or more RB sets from RB sets within the selected resource pool where a consistency LBT failure of the sidelink unlicensed interface has not occurred.

In addition, the above first resource selection or reselection process further comprises:
when no RB set where a consistency LBT failure of the sidelink unlicensed interface has not occurred exists in a selected resource pool of the terminal, triggering resource pool reselection, and selecting one or more RB sets from RB sets within a reselected resource pool where a consistency LBT failure of the sidelink unlicensed interface has not occurred.

In the above process, the terminal may select RB sets randomly, based on sensing, or based on partial sensing.

It should be noted that at least one embodiment of the present disclosure provides a processing method for a resource allocation mode change of a sidelink unlicensed interface, which solves the problem that when a terminal experiences a consistency LBT failure of the sidelink unlicensed interface and subsequently receives a resource allocation mode reconfiguration, the terminal can perform an appropriate process, thereby ensuring that the system can operate normally.

The technical solution provided by the embodiment of the present disclosure is applicable to various systems, particularly to fifth generation (5G) systems. for example, the applicable systems may include a Global System for Mobile Communication (GSM) system, a Code Division Multiple Access (CDMA) system, a Wideband Code Division Multiple Access (WCDMA) General Packet Radio Service (GPRS) system, a Long Term Evolution (LTE) system, a Frequency Division Duplex (FDD) LTE system, a Time Division Duplex (TDD) LTE system, a Long Term Evolution-Advanced (LTE-A) system, a Universal Mobile Telecommunication System (UMTS), a Worldwide Interoperability for Microwave Access (WiMAX) system, or a 5G New Radio (NR) system. these systems all include terminals (also referred to as terminal devices) and network devices. the systems may further include a core network part, for example, an Evolved Packet System (EPS) or a 5G System (5GS).

The terminal described in the embodiments of the present disclosure, also referred to as a terminal device, may refer to a device that provides voice and/or data connectivity for a user, a handheld device with wireless connectivity, or another processing device connected to a wireless modem. in different systems, the terminal device may have different names. for example, in a fifth generation (5g) system, the terminal device may be referred to as user equipment (ue). a wireless terminal device may communicate with one or more core networks (cns) via a radio access network (ran). the wireless terminal device may be a mobile terminal device, such as a mobile phone (or "cellular" phone), or a computer with mobile terminal capability, for example, a portable, pocket, handheld, built-in, or vehicle-mounted mobile device that exchanges voice and/or data with the ran. examples include a personal communication service (pcs) phone, a cordless phone, a session initiation protocol (sip) phone, a wireless local loop (wll) station, or a personal digital assistant (pda). the wireless terminal device may also be referred to as a system, subscriber unit, subscriber station, mobile station, mobile, remote station, access point, remote terminal, access terminal, user terminal, user agent, or user device. the present disclosure is not limited to these examples.

The network device described in the embodiments of the present disclosure may be a base station, which may include multiple cells serving terminals. depending on the application scenario, the base station may also be referred to as an access point, or as a device in an access network that communicates with wireless terminal devices over an air interface through one or more sectors, or by other names. the network device may exchange air-interface frames with internet protocol (ip) packets, acting as a router between the wireless terminal device and the rest of the access network, which may include an ip communication network. the network device may also coordinate attribute management of the air interface. for example, the network device in the embodiments of the present disclosure may be a base transceiver station (bts) in a global system for mobile communications (gsm) or a code division multiple access (cdma) system, a nodeb in a wideband code division multiple access (wcdma) system, an evolved nodeb (enb or e-nodeb) in a long term evolution (lte) system, or a gnb in a fifth generation (5g) network architecture (next generation system). it may also be a home evolved nodeb (henb), a relay node, a femto base station, or a pico base station. the embodiments of the present disclosure are not limited thereto. in some network structures, the network device may include a centralized unit (cu) node and a distributed unit (du) node, which may also be deployed separately in geography.

Multiple-input multiple-output (mimo) transmission may be performed between the network device and the terminal device using one or more antennas on each side. the mimo transmission may be single-user mimo (su-mimo) or multi-user mimo (mu-mimo). depending on the configuration and number of antenna combinations, the mimo transmission may be two-dimensional mimo (2d-mimo), three-dimensional mimo (3d-mimo), full-dimension mimo (fd-mimo), or massive mimo, and may be implemented as diversity transmission, precoding transmission, or beamforming transmission.

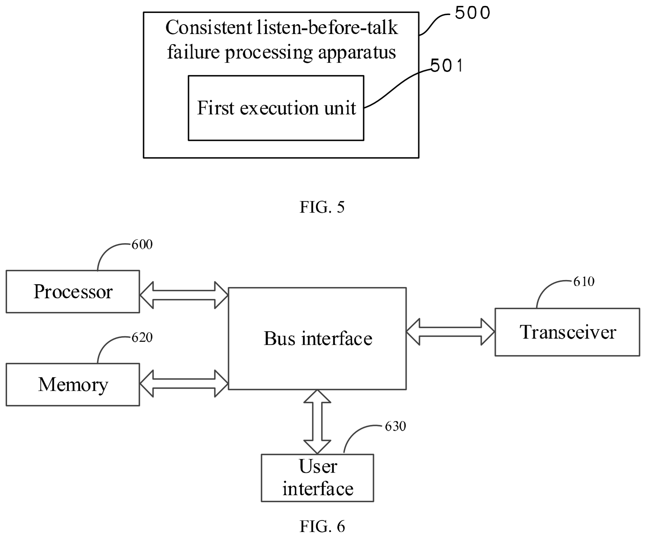

As shown in FIG. 5, an embodiment of the present disclosure provides an apparatus 500 for handling consistency listen-before-talk failure, applied to a terminal, comprising:
a first execution unit 501, configured to perform a first operation when a resource allocation mode reconfiguration message of a sidelink unlicensed interface is received in a case of a consistency listen-before-talk failure of the sidelink unlicensed interface;
wherein the first operation comprises at least one of the following:
   when a resource allocation mode of the sidelink unlicensed interface of the terminal is reconfigured from a first resource allocation mode to a second resource allocation mode, triggering a media access control control element for a consistency listen-before-talk failure of the sidelink unlicensed interface;
   when a resource allocation mode of the sidelink unlicensed interface of the terminal is reconfigured from the second resource allocation mode to the first resource allocation mode, triggering selection or reselection of a first resource.

In some embodiments, when the first operation comprises triggering a media access control control element for a consistency listen-before-talk failure of the sidelink unlicensed interface in a case that the resource allocation mode of the sidelink unlicensed interface of the terminal is reconfigured from the first resource allocation mode to the second resource allocation mode, the apparatus further comprises:
a processing unit, configured to stop recovery from a consistency listen-before-talk failure of the sidelink unlicensed interface.

In some embodiments, when the first operation comprises triggering selection or reselection of a first resource in a case that a resource allocation mode of a sidelink unlicensed interface of a terminal is reconfigured from a second resource allocation mode to a first resource allocation mode, the apparatus further comprises:
a second execution unit, configured to perform a second operation;
wherein the second operation comprises at least one of the following:
   discarding a media access control control element for a consistency listen-before-talk failure of the sidelink unlicensed interface that has been generated;
   canceling a triggered consistency listen-before-talk failure of the sidelink unlicensed interface.

In some embodiments, the first resource comprises at least one of the following:
a resource block set;
a resource pool.
in some embodiments, the implementation of selection or reselection of the first resource comprises at least one of the following:
   performing resource pool selection or reselection, and selecting at least one resource block set within the selected resource pool;
   selecting at least one resource block set within a target resource pool, wherein the target resource pool comprises a resource pool used by the terminal before reconfiguration of a resource allocation mode of the sidelink unlicensed interface.

In some embodiments, the implementation of selecting at least one resource block set within the selected resource pool comprises:
determining a first target resource block set within the selected resource pool, wherein the first target resource block set comprises resource block sets where a consistency listen-before-talk failure of the sidelink unlicensed interface has not occurred;
selecting at least one resource block set from the first target resource block set.

In some embodiments, the implementation of selecting at least one resource block set within the target resource pool comprises:
determining a second target resource block set within the target resource pool, wherein the second target resource block set comprises resource block sets where a consistency listen-before-talk failure of the sidelink unlicensed interface has not occurred;
selecting at least one resource block set from the second target resource block set.
in some embodiments, the apparatus further comprises:
   a triggering unit, configured to trigger resource pool reselection when no resource block set where a consistency listen-before-talk failure of the sidelink unlicensed interface has not occurred exists in a resource pool;
   a selecting unit, configured to select at least one resource block set from resource block sets in a reselected resource pool where a consistency listen-before-talk failure of the sidelink unlicensed interface has not occurred.
   in some embodiments, the implementation of selecting at least one resource block set comprises at least one of the following:
      randomly selecting at least one resource block set;
      selecting at least one resource block set based on sensing;
      selecting at least one resource block set based on partial sensing.

In some embodiments, the consistency listen-before-talk failure of the sidelink unlicensed interface comprises at least one of the following:
a consistency listen-before-talk failure of the sidelink unlicensed interface is triggered by the terminal;
a consistency listen-before-talk failure of the sidelink unlicensed interface is triggered by the terminal and the triggered consistency listen-before-talk failure is not canceled.

In some embodiments, the first resource allocation mode is a terminal autonomous resource allocation mode, and the second resource allocation mode is a network-scheduled resource allocation mode.

It should be noted that the apparatus embodiment corresponds one-to-one with the method embodiment described above, and all implementations in the method embodiment are applicable to the apparatus embodiment and can achieve the same technical effects.

It should be noted that the division of units in the embodiments of the present disclosure is illustrative and represents only a logical functional division. in actual implementation, other divisions may also be adopted. in addition, each functional unit in the embodiments of the present disclosure may be integrated into one processing unit, or each unit may physically exist independently, or two or more units may be integrated into one unit. the integrated units may be implemented in hardware form or as software function modules.

If the integrated units are implemented in the form of software function modules and are sold or used as independent products, they may be stored in a processor-readable storage medium. Based on this understanding, the technical solutions of the present disclosure, in essence or at least in part, may be embodied as a software product. The computer software product is stored in a storage medium and includes several instructions configured to cause a computer device (which may be a personal computer, server, or network device, etc.) or a processor to execute all or part of the steps of the methods described in the embodiments of the present disclosure. The storage medium may include various media capable of storing program codes, such as a USB flash disk, mobile hard disk, Read-Only Memory (ROM), Random Access Memory (RAM), magnetic disk, or optical disc.

As shown in FIG. 6, an embodiment of the present disclosure further provides a terminal, comprising a processor 600, a transceiver 610, a memory 620, and a program stored in the memory 620 and executable on the processor 600; wherein the transceiver 610 is connected to the processor 600 and the memory 620 through a bus interface, wherein the processor 600 is configured to read the program from the memory and execute the following processes:
in a case of a consistency Listen-Before-Talk failure of a sidelink unlicensed interface, when a resource allocation mode reconfiguration message of the sidelink unlicensed interface is received, performing a first operation;
wherein the first operation comprises at least one of the following:
   when a resource allocation mode of the sidelink unlicensed interface of the terminal is reconfigured from a first resource allocation mode to a second resource allocation mode, triggering a Media Access Control control element for a consistency Listen-Before-Talk failure of the sidelink unlicensed interface;
   when a resource allocation mode of the sidelink unlicensed interface of the terminal is reconfigured from the second resource allocation mode to the first resource allocation mode, triggering selection or reselection of a first resource.

The transceiver 610 is configured to receive and transmit data under the control of the processor 600.

In FIG. 6, the bus architecture may include any number of interconnected buses and bridges, specifically linking various circuits of one or more processors represented by the processor 600 and the memory represented by the memory 620. The bus architecture may also link various other circuits such as peripheral devices, voltage regulators, and power management circuits, all of which are well known in the art; therefore, they will not be further described herein. The bus interface provides an interface. The transceiver 610 may include multiple components, including a transmitter and a receiver, providing units for communication with various other devices over transmission media; these transmission media may include wireless channels, wired channels, or optical cables. For different user devices, the user interface 630 may also include external or internal interfaces for connecting required devices, including but not limited to keypads, displays, speakers, microphones, and joysticks.

The processor 600 is responsible for managing the bus architecture and general processing, and the memory 620 may store data used by the processor 600 when performing operations.

Optionally, the processor 600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor, by invoking the computer program stored in the memory, is configured to execute any of the methods provided in the embodiments of the present disclosure according to the obtained executable instructions. The processor and the memory may also be physically arranged separately.

In some embodiments, when the first operation comprises that, if a resource allocation mode of the sidelink unlicensed interface of the terminal is reconfigured from a first resource allocation mode to a second resource allocation mode, a Media Access Control control element for a consistency Listen-Before-Talk failure of the sidelink unlicensed interface is triggered, the processor, when reading the computer program in the memory, is further configured to perform the following operation:
stopping the recovery of the consistency Listen-Before-Talk failure of the sidelink unlicensed interface.

In some embodiments, when the first operation comprises that, if a resource allocation mode of the sidelink unlicensed interface of the terminal is reconfigured from a second resource allocation mode to a first resource allocation mode, selection or reselection of a first resource is triggered, the processor, when reading the computer program in the memory, is further configured to perform the following operation:
performing a second operation;
wherein the second operation comprises at least one of the following:
   discarding a Media Access Control control element for a consistency Listen-Before-Talk failure of the sidelink unlicensed interface that has already been generated;
   canceling a triggered consistency Listen-Before-Talk failure of the sidelink unlicensed interface.

In some embodiments, the first resource comprises at least one of the following:
a resource block set;
a resource pool.

In some embodiments, the processor, when reading the computer program in the memory, is configured to perform at least one of the following operations:
performing resource pool selection or reselection, and selecting at least one resource block set in the selected resource pool;
selecting at least one resource block set in a target resource pool, wherein the target resource pool comprises a resource pool used by the sidelink unlicensed interface of the terminal before reconfiguration of the resource allocation mode.

In some embodiments, the processor, when reading the computer program in the memory, is configured to perform the following operations:
determining a first target resource block set in the selected resource pool, wherein the first target resource block set comprises resource block sets in which a consistency Listen-Before-Talk failure of the sidelink unlicensed interface has not occurred;
selecting at least one resource block set from the first target resource block set.

In some embodiments, the processor, when reading the computer program in the memory, is configured to perform the following operations:
determining a second target resource block set in the target resource pool, wherein the second target resource block set comprises resource block sets in which a consistency Listen-Before-Talk failure of the sidelink unlicensed interface has not occurred;
selecting at least one resource block set from the second target resource block set.

In some embodiments, the processor, when reading the computer program in the memory, is further configured to perform the following operations:
if no resource block set in the resource pool has experienced a consistency Listen-Before-Talk failure of the sidelink unlicensed interface, triggering a resource pool reselection;
selecting at least one resource block set from resource block sets in the reselected resource pool in which a consistency Listen-Before-Talk failure of the sidelink unlicensed interface has not occurred.

In some embodiments, the processor, when reading the computer program in the memory, is configured to perform at least one of the following operations:
randomly selecting at least one resource block set;
selecting at least one resource block set based on sensing;
selecting at least one resource block set based on partial sensing.

In some embodiments, the consistency Listen-Before-Talk failure of the sidelink unlicensed interface comprises at least one of the following:
the sidelink unlicensed interface of the terminal triggers a consistency Listen-Before-Talk failure;
the sidelink unlicensed interface of the terminal triggers a consistency Listen-Before-Talk failure, and the triggered consistency Listen-Before-Talk failure is not canceled.

In some embodiments, the first resource allocation mode is a terminal autonomous resource allocation mode, and the second resource allocation mode is a network-scheduled resource allocation mode.

It should be noted that the terminal provided in the embodiments of the present disclosure is capable of implementing all the method steps realized by the aforementioned method embodiments and achieving the same technical effects. Therefore, detailed descriptions of the parts identical to and beneficial effects corresponding to those in the method embodiments are omitted for brevity.

The present disclosure further provides a computer-readable storage medium on which a computer program is stored, wherein when performed by a processor, the computer program performs the steps of a consistency Listen-Before-Talk failure processing method applied to a terminal. The processor-readable storage medium may be any available medium or data storage device accessible to the processor, including but not limited to magnetic storage media (such as floppy disks, hard disks, magnetic tapes, and magneto-optical disks), optical storage media (such as Compact Discs (CD), Digital Versatile Discs (DVD), Blu-ray Discs (BD), and High-Definition Versatile Discs (HVD)), and semiconductor memories (such as Read-Only Memory (ROM), Erasable Programmable Read-Only Memory (EPROM), Electrically Erasable Programmable Read-Only Memory (EEPROM), non-volatile memory (NAND FLASH), and Solid State Disks or Solid State Drives (SSD)).

It should be understood by those skilled in the art that the embodiments of the present disclosure may be provided as a method, a system, or a computer program product. Therefore, the present disclosure may be implemented in the form of a purely hardware embodiment, a purely software embodiment, or an embodiment combining hardware and software aspects. Furthermore, the present disclosure may be embodied as a computer program product implemented on one or more computer-readable storage media containing computer-usable program code, including but not limited to magnetic disks and optical disks.

The present disclosure is described with reference to flowcharts and/or block diagrams of methods, apparatuses (systems), and computer program products according to the embodiments of the disclosure. It should be understood that each flow and/or block in the flowcharts and/or block diagrams may be implemented by computer-executable instructions. These computer-executable instructions may be provided to a processor of a general-purpose computer, a special-purpose computer, an embedded processor, or other programmable data processing apparatus to produce a machine, such that the instructions performed by the processor of the computer or other programmable data processing apparatus create means for implementing the functions specified in one or more flows in the flowcharts and/or one or more blocks in the block diagrams.

These processor-executable instructions may also be stored in a processor-readable memory that can direct a computer or other programmable data processing apparatus to operate in a particular manner, such that the instructions stored in the processor-readable memory produce an article of manufacture that includes instruction means for implementing the functions specified in one or more flows in the flowcharts and/or one or more blocks in the block diagrams.

These processor-executable instructions may also be loaded onto a computer or other programmable data processing apparatus, such that a series of operational steps are performed on the computer or other programmable apparatus to produce a computer-implemented process. The instructions executed on the computer or other programmable apparatus thus provide steps for implementing the functions specified in one or more flows in the flowcharts and/or one or more blocks in the block diagrams.

It should be understood that the division of the above modules is merely a logical functional division, and in actual implementation, all or part of the modules may be integrated into a single physical entity or may be physically separated. These modules may all be implemented in the form of software invoked by processing elements, or entirely in hardware form, or partially through software invoked by processing elements and partially through hardware. For example, a certain module may be an independently provided processing element, may be integrated into a chip of the aforementioned apparatus, or may be stored in the memory of the apparatus in the form of program code and invoked and performed by one of the processing elements of the apparatus to perform the functions of the determined module. The implementation of other modules is similar. Furthermore, all or part of these modules may be integrated together or implemented independently. The processing element described herein may be an integrated circuit with signal processing capabilities. In implementation, the steps of the above methods or the modules described above may be completed by integrated logic circuits in the processing elements or by software-form instructions.

For example, each module, unit, subunit, or submodule may be one or more integrated circuits configured to implement the above methods, such as one or more Application Specific Integrated Circuits (ASICs), one or more Digital Signal Processors (DSPs), or one or more Field Programmable Gate Arrays (FPGAs). In another example, when a certain module is implemented through a processing element invoking program code, the processing element may be a general-purpose processor such as a Central Processing Unit (CPU) or another processor capable of invoking program code. Furthermore, these modules may also be integrated together and implemented in the form of a System-On-a-Chip (SOC).

The terms "first," "second," and the like used in the specification and claims of the present disclosure are only for distinguishing similar objects and are not intended to indicate a specific order or sequence. It should be understood that data used in this way may be interchangeable under appropriate circumstances so that the embodiments of the present disclosure described herein may be practiced in sequences other than those illustrated or described. In addition, the terms " comprise" and "include," and any variations thereof, are intended to cover non-exclusive inclusion. For example, a process, method, system, product, or apparatus that comprises a series of steps or elements is not limited to only those clearly listed steps or elements but may include other steps or elements not explicitly listed or inherent to such processes, methods, products, or apparatuses. Furthermore, the term "and/or" as used in the specification and claims denotes the inclusion of at least one of the associated objects. For example, "A and/or B and/or C" denotes seven possibilities, namely: A alone, B alone, C alone, A and B together, B and C together, A and C together, and A, B, and C together. Similarly, the phrase "at least one of A and B" in the specification and claims should be understood to mean "A alone, B alone, or A and B together."

Obviously, those skilled in the art can make various modifications and variations to the present disclosure without departing from the spirit and scope thereof. Therefore, if such modifications and variations of the present disclosure fall within the scope of the claims of the present disclosure and their equivalent technical solutions, the present disclosure is also intended to encompass such modifications and variations.

## Claims

1. A method for processing a consistent listen-before-talk failure, performed by a terminal, comprising:
in a case of a consistent listen-before-talk failure on a sidelink interface, when a sidelink interface resource allocation mode reconfiguration message is received, performing a first operation;
wherein the first operation comprises at least one of the following:
when a resource allocation mode of the sidelink interface of the terminal is reconfigured from a first resource allocation mode to a second resource allocation mode, triggering a media access control control element for the consistent listen-before-talk failure of the sidelink interface;
when a resource allocation mode of the sidelink interface of the terminal is reconfigured from the second resource allocation mode to the first resource allocation mode, triggering selection or reselection of a first resource.

2. The method according to claim 1, wherein when the first operation comprises reconfiguring the resource allocation mode of the sidelink interface of the terminal from the first resource allocation mode to the second resource allocation mode and triggering the media access control control element for the consistent listen-before-talk failure of the sidelink interface, the method further comprises:
stopping recovery from the consistent listen-before-talk failure of the sidelink interface.

3. The method according to claim 1, wherein when the first operation comprises reconfiguring the resource allocation mode of the sidelink interface of the terminal from the second resource allocation mode to the first resource allocation mode and triggering selection or reselection of the first resource, the method further comprises:
performing a second operation;
wherein the second operation comprises at least one of the following:
discarding a generated media access control control element for the consistent listen-before-talk failure of the sidelink interface;
canceling a triggered consistent listen-before-talk failure of the sidelink interface.

4. The method according to claim 1 or 3, wherein the first resource comprises at least one of the following:
a resource block set;
a resource pool.

5. The method according to claim 1 or 3, wherein the first resource selection or reselection comprises at least one of the following:
performing resource pool selection or reselection, and selecting at least one resource block set in the selected resource pool;
selecting at least one resource block set in a target resource pool, wherein the target resource pool comprises a resource pool used by the terminal before reconfiguration of the sidelink interface resource allocation mode.

6. The method according to claim 5, wherein selecting at least one resource block set in the selected resource pool comprises:
determining, in the selected resource pool, a first target resource block set, wherein the first target resource block set comprises a resource block set in which no consistent listen-before-talk failure of the sidelink interface has occurred;
selecting at least one resource block set in the first target resource block set.

7. The method according to claim 5, wherein selecting at least one resource block set in the target resource pool comprises:
determining, in the target resource pool, a second target resource block set, wherein the second target resource block set comprises a resource block set in which no consistent listen-before-talk failure of the sidelink interface has occurred;
selecting at least one resource block set in the second target resource block set.

8. The method according to claim 5, further comprising:
when no resource block set in which no consistent listen-before-talk failure of the sidelink interface has occurred exists in the resource pool, triggering resource pool reselection;
selecting at least one resource block set in the resource block set in which no consistent listen-before-talk failure of the sidelink interface has occurred in the reselected resource pool.

9. The method according to claim 5, wherein selecting at least one resource block set comprises at least one of the following:
randomly selecting at least one resource block set;
selecting at least one resource block set based on sensing;
selecting at least one resource block set based on partial sensing.

10. The method according to claim 1, wherein the consistent listen-before-talk failure of the sidelink interface comprises at least one of the following:
the sidelink interface of the terminal triggers a consistent listen-before-talk failure;
the sidelink interface of the terminal triggers a consistent listen-before-talk failure and the triggered consistent listen-before-talk failure is not canceled.

11. The method according to claim 1, wherein the first resource allocation mode is a terminal-selected resource allocation mode, and the second resource allocation mode is a network-scheduled resource allocation mode.

12. A terminal, comprising a memory, a transceiver, and a processor, wherein:
the memory is configured to store a computer program;
the transceiver is configured to transmit and receive data under the control of the processor;
the processor is configured to read the computer program stored in the memory and perform the following operations:
in a case of a consistent listen-before-talk failure on a sidelink interface, when a sidelink interface resource allocation mode reconfiguration message is received, performing a first operation;
wherein the first operation comprises at least one of the following:
when a resource allocation mode of the sidelink interface of the terminal is reconfigured from a first resource allocation mode to a second resource allocation mode, triggering a media access control control element for the consistent listen-before-talk failure of the sidelink interface;
when a resource allocation mode of the sidelink interface of the terminal is reconfigured from the second resource allocation mode to the first resource allocation mode, triggering selection or reselection of a first resource.

13. The terminal according to claim 12, wherein when the first operation comprises reconfiguring the resource allocation mode of the sidelink interface of the terminal from the first resource allocation mode to the second resource allocation mode and triggering the media access control control element for the consistent listen-before-talk failure of the sidelink interface, the processor is further configured to read the computer program stored in the memory and perform the following operation:
stopping recovery from the consistent listen-before-talk failure of the sidelink interface.

14. The terminal according to claim 12, wherein when the first operation comprises reconfiguring the resource allocation mode of the sidelink interface of the terminal from the second resource allocation mode to the first resource allocation mode and triggering selection or reselection of the first resource, the processor is further configured to read the computer program stored in the memory and perform the following operation:
performing a second operation;
wherein the second operation comprises at least one of the following:
discarding a generated media access control control element for the consistent listen-before-talk failure of the sidelink interface;
canceling a triggered consistent listen-before-talk failure of the sidelink interface.

15. The terminal according to claim 12 or 14, wherein the first resource comprises at least one of the following:
a resource block set;
a resource pool.

16. The terminal according to claim 12 or 14, wherein the processor is configured to read the computer program stored in the memory and perform at least one of the following operations:
performing resource pool selection or reselection, and selecting at least one resource block set in the selected resource pool;
selecting at least one resource block set in a target resource pool, wherein the target resource pool comprises a resource pool used by the terminal before reconfiguration of the sidelink interface resource allocation mode.

17. The terminal according to claim 16, wherein the processor is configured to read the computer program stored in the memory and perform the following operations:
determining, in the selected resource pool, a first target resource block set, wherein the first target resource block set comprises a resource block set in which no consistent listen-before-talk failure of the sidelink interface has occurred;
selecting at least one resource block set in the first target resource block set.

18. The terminal according to claim 16, wherein the processor is configured to read the computer program stored in the memory and perform the following operations:
determining, in the target resource pool, a second target resource block set, wherein the second target resource block set comprises a resource block set in which no consistent listen-before-talk failure of the sidelink interface has occurred;
selecting at least one resource block set in the second target resource block set.

19. The terminal according to claim 16, wherein the processor is configured to read the computer program stored in the memory and further perform the following operations:
when no resource block set in which no consistent listen-before-talk failure of the sidelink interface has occurred exists in the resource pool, triggering resource pool reselection;
selecting at least one resource block set in the resource block set in which no consistent listen-before-talk failure of the sidelink interface has occurred in the reselected resource pool.

20. The terminal according to claim 16, wherein the processor is configured to read the computer program stored in the memory and perform at least one of the following operations:
randomly selecting at least one resource block set;
selecting at least one resource block set based on sensing;
selecting at least one resource block set based on partial sensing.

21. The terminal according to claim 12, wherein the consistent listen-before-talk failure of the sidelink interface comprises at least one of the following:
the sidelink interface of the terminal triggers a consistent listen-before-talk failure;
the sidelink interface of the terminal triggers a consistent listen-before-talk failure and the triggered consistent listen-before-talk failure is not canceled.

22. The terminal according to claim 12, wherein the first resource allocation mode is a terminal-selected resource allocation mode, and the second resource allocation mode is a network-scheduled resource allocation mode.

23. An apparatus for processing a consistent listen-before-talk failure, applied to a terminal, comprising:
a first execution unit configured to, in a case of a consistent listen-before-talk failure on a sidelink interface, when a sidelink interface resource allocation mode reconfiguration message is received, perform a first operation;
wherein the first operation comprises at least one of the following:
when a resource allocation mode of the sidelink interface of the terminal is reconfigured from a first resource allocation mode to a second resource allocation mode, triggering a media access control control element for the consistent listen-before-talk failure of the sidelink interface;
when a resource allocation mode of the sidelink interface of the terminal is reconfigured from the second resource allocation mode to the first resource allocation mode, triggering selection or reselection of a first resource.

24. The apparatus according to claim 23, further comprising:
a processing unit configured to, when the first operation comprises reconfiguring the resource allocation mode of the sidelink interface of the terminal from the first resource allocation mode to the second resource allocation mode and triggering the media access control control element for the consistent listen-before-talk failure of the sidelink interface, stop recovery from the consistent listen-before-talk failure of the sidelink interface.

25. The apparatus according to claim 23, further comprising:
a second execution unit configured to, when the first operation comprises reconfiguring the resource allocation mode of the sidelink interface of the terminal from the second resource allocation mode to the first resource allocation mode and triggering selection or reselection of the first resource, perform a second operation;
wherein the second operation comprises at least one of the following:
discarding a generated media access control control element for the consistent listen-before-talk failure of the sidelink interface;
canceling a triggered consistent listen-before-talk failure of the sidelink interface.

26. The apparatus according to claim 23 or 25, wherein the first resource comprises at least one of the following:
a resource block set;
a resource pool.

27. The apparatus according to claim 23 or 25, wherein an implementation manner of the first resource selection or reselection comprises at least one of the following:
performing resource pool selection or reselection, and selecting at least one resource block set in the selected resource pool;
selecting at least one resource block set in a target resource pool, wherein the target resource pool comprises a resource pool used by the terminal before reconfiguration of the sidelink interface resource allocation mode.

28. A processor-readable storage medium, wherein the processor-readable storage medium stores a computer program, and the computer program is configured to cause the processor to execute the method according to any one of claims 1 to 11.
